# EUROPEAN PATENT APPLICATION

(11) **EP 4 764 230 A1**
(43) Date of publication of application: **24.06.2026**
(21) Application number: 25218511.1
(22) Date of filing: 25.11.2025
(51) Int. Cl.: F16B 5/06, A47B 91/08, E04B 1/98, H05K 7/14, F16B 4/00

(54) **BRACKET ASSEMBLY AND METHOD FOR SECURING A CABINET FOR SEISMIC AND TRANSPORTATION CONDITIONS**

(30) Priority: 26.11.2024 IN 202421092269; 24.11.2025 US 202519399460
(71) Applicant: Vertiv Corporation, Westerville, OH 43082 (US)
(72) Inventor: THORKAR, Ganesh Sudhaker, Westerville, 43082 (US); NALAWADE, Rushikesh Prakash, Westerville, 43082 (US); FROGNESS, Harlow Einar, Westerville, 43082 (US)
(74) Representative: Bryn-Jacobsen, Caelia

(57) **Abstract**

A bracket assembly and a method for securing a cabinet for seismic and transportation conditions using the bracket assembly is disclosed. The bracket assembly includes a plurality of brackets configured to be positioned at each corner of the cabinet. Each bracket includes a first side configured to be securely fastened to the pallet or ground using fasteners. Each bracket further includes a second side configured to engage the cabinet. The plurality of brackets absorbs a majority of transportation load, thereby isolating the cabinet from stresses caused by direct attachment to the pallet or the ground.

## Description

### CROSS REFERNCE TO RELATED APPLICATIONS

This application claims benefit of and priority to Indian Patent Application No. 202421092269, filed November 26, 2024.

### BACKGROUND

Conventional cabinet and air-handling unit (AHU) transportation practices typically involve fastening the unit directly to a pallet using self-tapping fasteners, welded lugs, or similar hardware. These approaches rely on localized fastening points that can introduce stress concentrations, potentially deforming frame members during lifting, vibration, or transit impact. Similar fastening practices are also used when securing cabinets directly to the ground for seismic anchoring, where concentrated loads and ground-induced accelerations may further compromise frame integrity. While simple and low-cost, such practices can compromise structural integrity, complicate field installation, and may require additional repair or reinforcement of the cabinet frame after delivery, increasing handling time and associated service costs.

### SUMMARY OF THE INVENTION

This summary is provided to introduce aspects related to a bracket assembly and a method for securing a cabinet for seismic and transportation conditions. In general, the bracket assembly is arranged at multiple corners of the cabinet and is configured to transfer transportation loads away from the cabinet frame and into the pallet interface. By doing so, the bracket assembly helps maintain cabinet structural integrity, reduces the likelihood of deformation or damage during transit, and simplifies setup and removal. The approach may also reduce the need for frame-penetrating fasteners and enable easier handling at the installation site.

In an aspect, a bracket assembly for securing a cabinet for seismic and transportation conditions is disclosed. The bracket assembly may include a plurality of brackets configured to be positioned at each corner of the cabinet. Each bracket may include a first side configured to be securely fastened to a pallet or ground using fasteners. Each bracket may also include a second side configured to engage the cabinet. The plurality of brackets absorbs a majority of transportation load, thereby isolating the cabinet from stresses caused by direct attachment to the pallet or the ground.

In another aspect, a method for securing a cabinet for seismic and transportation conditions using a bracket assembly is disclosed. The method may include positioning a plurality of brackets of the bracket assembly at each corner of the cabinet. The method may further include securing a first side of each bracket to a pallet or ground using fasteners. The method may further include engaging a second side of each bracket with the cabinet. The plurality of brackets may absorb a majority of transportation load, thereby isolating the cabinet from stresses caused by direct attachment to the pallet or the ground.

Other aspects and advantages of the invention will become apparent from the following description, taken in conjunction with the accompanying drawings, illustrating by way of example the principles of the invention.

### BRIEF DESCRIPTION OF THE DRAWINGS

The accompanying figures of the drawing, which are included to provide a further understanding of general aspects of the assembly, are incorporated in and constitute a part of this specification. If only the first numerical reference label is used in the specification, the description is applicable to any one of the similar components and/or features having the same first numerical reference label irrespective of the suffix.
FIG. 1A illustrates a diagram depicting a cabinet secured to a pallet using direct fastening.
FIG. 1B illustrates a schematic diagram depicting the cabinet resting directly on the pallet.
FIG. 2A illustrates the cabinet mounted on the pallet using a bracket assembly.
FIG. 2B illustrates a schematic front view showing a plurality of brackets supporting the cabinet on the pallet.
FIG. 2C illustrates a schematic rear view showing the plurality of brackets supporting the cabinet on the pallet.
FIG. 2D illustrates a schematic side view showing the plurality of brackets engaging the cabinet on the pallet.
FIG. 3A illustrates a comparative chart showing cabinet deformation during transportation with and without the plurality of brackets.
FIG. 3B illustrates a comparative chart showing cabinet stress during transportation with and without the plurality of brackets.
FIG. 4 illustrates a table showing multiple brackets design iterations and corresponding mounting conditions.
FIG. 5A illustrates a chart showing comparative bracket stress values across the multiple brackets design iterations.
FIG. 5B illustrates a chart showing cabinet stress for the multiple brackets design iterations.
FIG. 5C illustrates a chart showing cabinet deformation for the multiple brackets design iterations.
FIG. 6A illustrates a perspective view of a seismic bracket.
FIG. 6B illustrates a schematic diagram depicting the cabinet resting directly on the ground using the seismic brackets.
FIG. 7 illustrates a flowchart of a method of securing a cabinet for seismic and transportation conditions using a bracket assembly.

### DETAILED DESCRIPTION

Illustrative examples are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed examples.

During transportation, cabinets are commonly secured to pallets using direct fastening methods such as self-tapping screws, lugs, or other localized mechanical attachment hardware. These practices place transportation-induced loads, vibration, and shock directly into the cabinet frame. As a result, high stress concentrations occur around the fastening locations, which may cause permanent deformation, surface damage, or structural weakening of the cabinet. Such effects can compromise dimensional stability, reduce assembly precision at the installation site, and increase the likelihood of repair or warranty claims. Additionally, the need to create holes in the cabinet frame for fastening adds manufacturing complexity, prolongs field handling time, and can reduce suitability for reuse across multiple shipments.

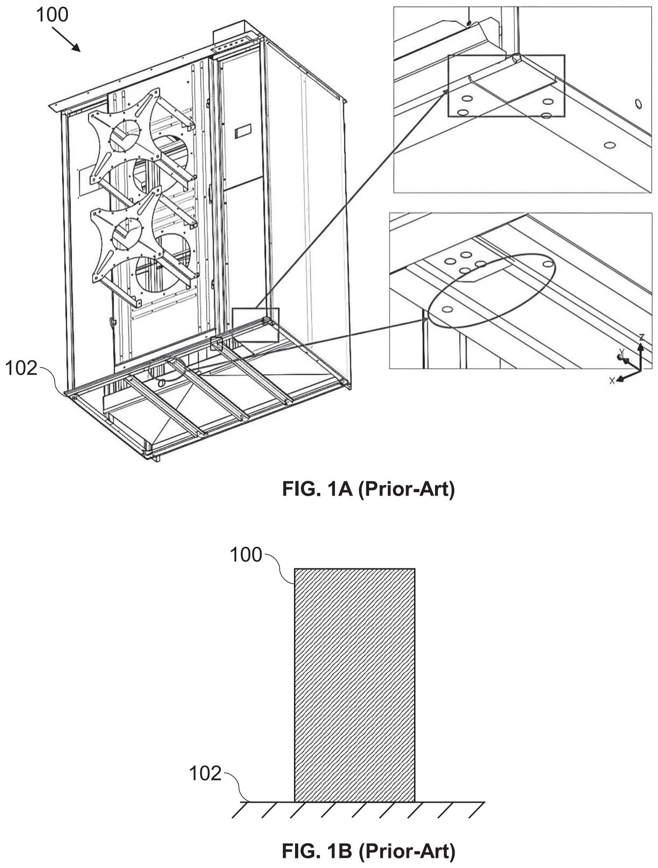

To address these transportation-related shortcomings, the present disclosure provides a bracket assembly configured to secure a cabinet to a pallet in a manner that substantially redirects transportation loads away from the cabinet frame. The bracket assembly includes a plurality of brackets, each positioned at a respective corner of the cabinet, wherein each bracket has a first side securely fastened to the pallet and a second side configured to engage the cabinet. By supporting the cabinet through comer-mounted brackets and isolating the cabinet from direct pallet attachment, the assembly reduces stress concentrations, minimizes structural deformation, and preserves the mechanical integrity of the cabinet throughout shipping. Examples will now be described in detail with reference to FIG. 1A through FIG. 7.

FIG. 1A illustrates a diagram depicting a cabinet 100 secured to a pallet 102 using direct fastening. As shown, the cabinet 100 rests on the pallet 102 and is fixed in place through fasteners driven directly into the frame structure of the cabinet. The enlarged views highlight representative fastener locations where multiple holes are formed in the cabinet frame to receive screws or similar mechanical fasteners for attachment to the pallet. During transportation, the direct fastening arrangement transfers load forces, shock, and vibration from the pallet 102 into the cabinet 100 through these localized fastening points. This approach may lead to stress concentrations around the fastener holes, potential deformation of cabinet frame members, and reduction in overall structural integrity. In addition, this approach requires drilling or forming holes in the cabinet frame, which may introduce manufacturing complexity, complicate removal at the destination, and increase the potential for warranty concerns due to structural degradation.

FIG. 1B illustrates a schematic diagram depicting the cabinet 100 resting directly on the pallet 102. In this conventional arrangement, the cabinet 100 is positioned on the upper surface of the pallet 102 without any additional supporting or interfacing structure. The cabinet 100 relies solely on its base surface for support, and no dedicated components are provided to restrain lateral or vertical motion relative to the pallet 102. As a result, the cabinet 100 may be susceptible to shifting, tipping, or vibration-induced movement during transport, potentially leading to instability, misalignment, or damage to the cabinet structure or associated equipment.

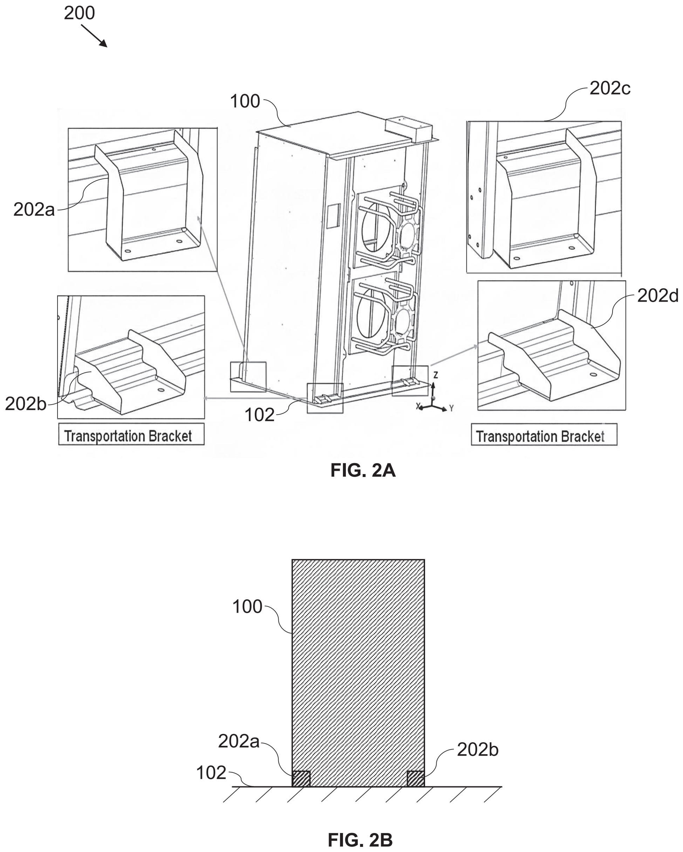

FIG. 2A illustrates the cabinet 100 mounted on the pallet 102 using a bracket assembly 200. As shown the bracket assembly 200 may include a plurality of brackets 202a-202d configured to be positioned at each corner of the cabinet 100. Each bracket of the plurality of brackets 202a-202d may include a first side that may be securely fastened to the pallet 102 using fasteners such as screws or bolts. Each bracket further includes a second side configured to engage the cabinet 100. In certain examples, engagement of the second side with the cabinet 100 is achieved via a press-fit mechanism that applies a pre-stressing effect to hold the cabinet 100. The press-fit mechanism may create an interference fit between the bracket assembly 200 and the cabinet 100, thereby ensuring that the cabinet 100 remains securely in place during transportation. The plurality of brackets 202a-202d may be formed from a material selected from a group consisting of metal alloys, reinforced polymers, and composite materials. In some implementations, the plurality of brackets 202a-202d is z-shaped and may include ribs for increased structural reinforcement, and an increased landing area on the second side of each bracket to enhance the engagement with the cabinet 100. The increased landing area and ribs further increase the load-bearing capacity of the bracket assembly 200 during transportation. As mounted, the plurality of brackets 202a-202d absorbs a majority of the transportation load, thereby isolating the cabinet 100 from stresses that would otherwise be imparted by direct attachment to the pallet 102.

In one example, the bracket assembly 200 is provided as a retrofittable assembly configured to installation on existing cabinets without modification to the cabinet frame. In this implementation, the plurality of brackets 202a-202d may be positioned at each corner of the cabinet 100, wherein the first side of each bracket may be fastened to the pallet 102 using fasteners and the second side may be configured to engage the cabinet 100 through a press-fit mechanism. In some cases, the press-fit mechanism may create an interference fit against exterior corner surfaces of the cabinet 100 to hold the cabinet 100 in place without requiring holes or mounting features in the cabinet frame. This retrofit configuration enables the bracket assembly 200 to absorb a majority of transportation load while preserving the structural integrity of the cabinet, and it allows field personnel to install or remove the bracket assembly 200 as needed for shipment, handling, or storage. The retrofittable bracket assembly 200 may be reused across multiple transportation events and may be formed from metal alloys, reinforced polymers, or composite materials. In certain arrangements, the plurality of brackets 202a-202d may be Z-shaped and may include ribs and an increased landing area to improve structural reinforcement and load-bearing capacity during transportation.

In another example, the bracket assembly 200 may be integrated into the cabinet 100 during manufacture. In this implementation, bracket attachment features such as receiving surfaces, complementary mating contours, or factory-installed fastener interfaces are incorporated into the cabinet frame. The plurality of brackets 202a-202d may be positioned at each corner of the cabinet 100 and may be welded, bonded, molded, or mechanically affixed to the cabinet 100 during fabrication. Each bracket may include a first side configured to be fastened to the pallet 102 and a second side configured to engage the cabinet via a press-fit mechanism, optionally providing an interference fit that stabilizes the cabinet 100 during transportation. Because bracket placement and alignment may be controlled during manufacturing, the integrated bracket assembly 200 may enhance positional accuracy, reduce field installation time, and maintain consistent load distribution across transportation events. The in-built brackets may be z-shaped and include ribs and an increased landing area to increase structural reinforcement and improve load-bearing capacity during transportation. This integrated configuration ensures that the bracket assembly 200 may absorb a majority of transportation load and isolates the cabinet 100 from stresses imposed by direct attachment to the pallet 102.

FIG. 2B illustrates a schematic front view showing the plurality of brackets 202a-202d supporting the cabinet 100 on the pallet 102. As depicted, each bracket is positioned at a corresponding corner region of the cabinet 100 such that the first side of each bracket is secured to the pallet 102, while the second side engages the cabinet 100. In this configuration, the plurality of brackets cooperatively supports and stabilizes the cabinet 100 during transportation by absorbing a majority of transportation load and limiting transmission of stress to the cabinet 100.

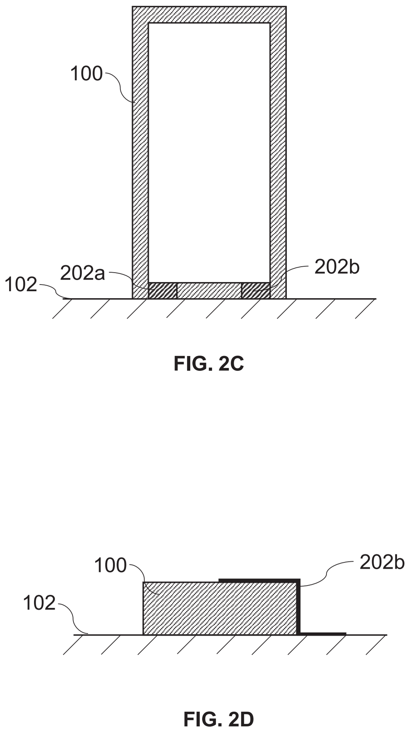

FIG. 2C illustrates a schematic rear view showing the plurality of brackets 202a-202d supporting the cabinet 100 on the pallet 102. As shown, the brackets 202a-202d may be positioned at rear corner regions of the cabinet 100, where a first side of each bracket is secured to the pallet 102 and a second side engages the cabinet 100. This configuration stabilizes the cabinet 100 during transportation by distributing transportation loads through the brackets 202a-202d rather than directly into the cabinet structure.

FIG. 2D illustrates a schematic side view showing the plurality of brackets 202a-202d engaging the cabinet 100 on the pallet 102. As shown, a first side of each bracket is fastened to the pallet 102 while a second side engages the cabinet 100, such as through a press-fit or interference fit. This engagement helps restrain movement of the cabinet 100 relative to the pallet 102 and enables the brackets to absorb transportation loads instead of transmitting those loads directly to the cabinet structure.

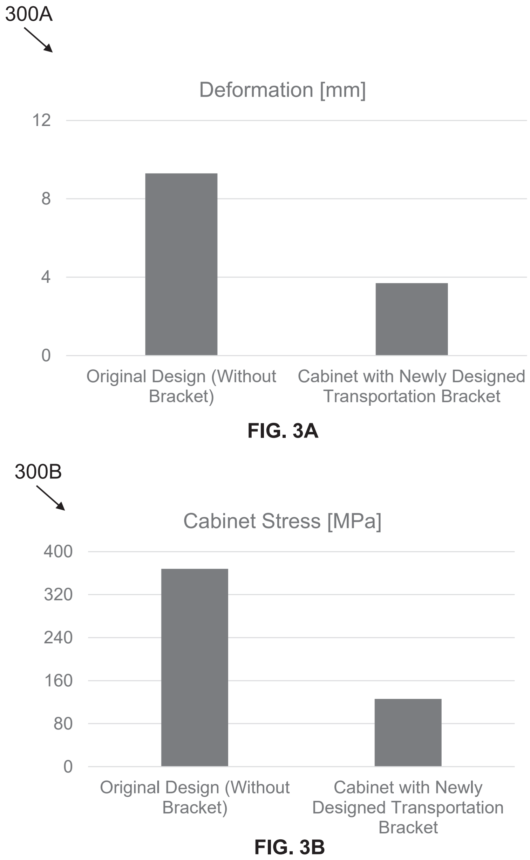

FIG. 3A illustrates a comparative chart 300A showing cabinet deformation during transportation with and without the plurality of brackets. The chart 300A may include two data series: a first data bar representing an original design configuration in which the cabinet is secured directly to the pallet without the plurality of brackets, and a second data bar representing an improved configuration in which the cabinet 100 is mounted to the pallet using the plurality of brackets. As shown, the first data bar corresponds to a substantially higher deformation value, indicating that direct fastening of the cabinet to the pallet results in greater distortion or warpage of the cabinet structure when exposed to transportation loads.

In the improved configuration, the second data bar demonstrates a significantly reduced deformation measurement. This reduction is attributable to the presence of the plurality of brackets, each of which includes a first side fastened to the pallet and a second side configured to engage the cabinet. By engaging the cabinet through press-fit or interference-fit contact, the plurality of brackets absorbs a majority of the transportation load instead of allowing load forces to be transmitted directly into the cabinet. As a result, the cabinet experiences less bending, twisting, or displacement under transport-induced shock or vibration.

The comparative results illustrated in FIG. 3A highlight the functional advantages of using the bracket assembly 200. By redistributing forces away from the cabinet 100 and into the pallet 102 through the plurality of brackets 202a-202d, overall cabinet stability is enhanced during transportation. This reduces the likelihood of permanent deformation, improves structural reliability on arrival, and reduces associated warranty or repair costs.

FIG. 3B illustrates a comparative chart 300B showing cabinet stress during transportation with and without the plurality of brackets 202a-202d. As shown, the first bar represents an original design arrangement in which the cabinet is secured directly to the pallet without the plurality of brackets. In this arrangement, elevated stress values are observed on the cabinet structure, indicating that transportation loads, vibration, and shock are transmitted directly into the cabinet frame. Such direct loading can introduce localized stress concentrations, resulting in potential frame deformation, fastener tear-out, or premature structural fatigue under repeated transport conditions.

The second bar represents an improved configuration in which the cabinet is mounted to the pallet through the plurality of brackets 202a-202d. Each bracket includes a first side fastened to the pallet and a second side configured to engage the cabinet through press-fit or interference-fit engagement. By providing this mechanical engagement, the plurality of brackets absorbs and redistributes transportation loads into the pallet, shielding the cabinet from direct loading. As a result, stress levels experienced by the cabinet are significantly reduced, thereby improving structural integrity and reducing the risk of permanent deformation.

The comparison depicted in FIG. 3B demonstrates the performance benefit of incorporating the plurality of brackets into the transportation arrangement. Reduced cabinet stress contributes to improved reliability during shipping, minimizes the likelihood of frame damage, and may decrease warranty claims associated with transportation-related failures. This configuration also helps preserve cabinet geometry, ensuring proper alignment during installation and service at the destination.

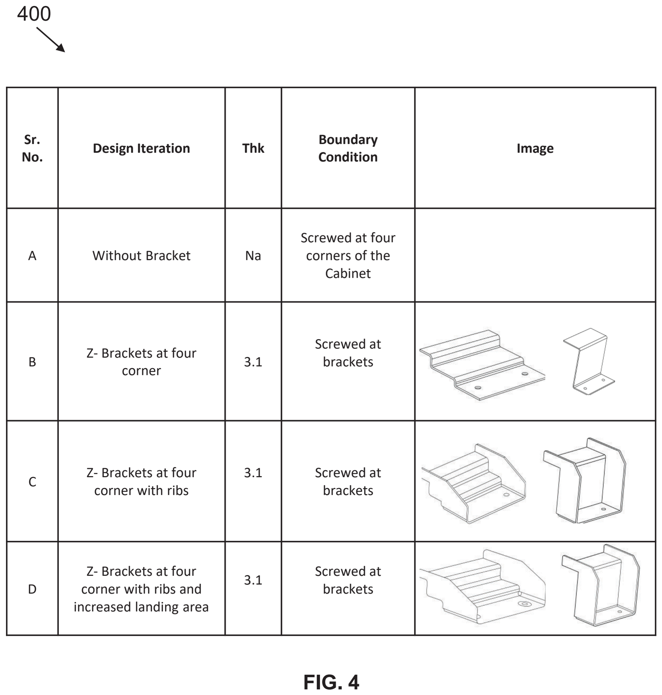

FIG. 4 illustrates a table 400 showing multiple brackets design iterations and corresponding mounting conditions. The table includes four example configurations, designated as Iteration A through Iteration D. Iteration A represents a baseline arrangement in which the cabinet is secured directly to the pallet without brackets. Iteration B depicts a configuration in which Z-shaped brackets are positioned at each corner of the cabinet, each having a thickness of approximately 3.1 mm and being fastened to the pallet. Iteration C illustrates a similar Z-shaped bracket configuration; however, each bracket further includes ribs to increase structural reinforcement. Iteration D illustrates Z-shaped brackets positioned at each corner and further includes both ribs and an increased landing area on the second side of each bracket to enhance engagement with the cabinet. For Iterations B through D, the mounting condition indicates that a first side of each bracket is fastened to the pallet while the cabinet is engaged by the second side of each bracket. These design variations demonstrate different approaches to increasing load-bearing capacity and structural performance during transportation.

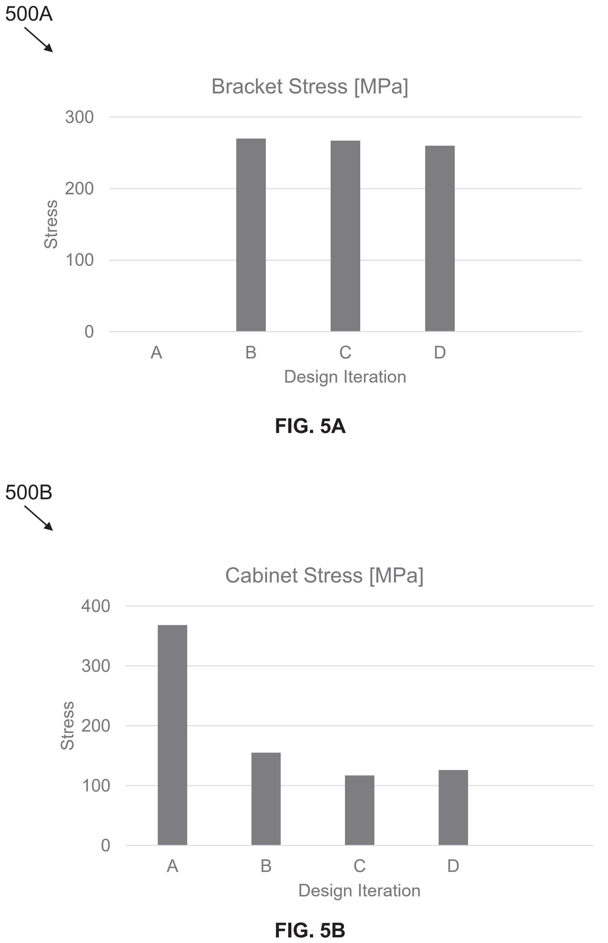

FIG. 5A illustrates a chart 500A showing comparative bracket stress values across the multiple brackets design iterations. The chart 500A includes data for Iterations B, C, and D, each of which employs a plurality of Z-shaped brackets positioned at corresponding corner regions of the cabinet. In Iteration B, the Z-shaped brackets exhibit a first bracket stress level under transportation loading. Iteration C demonstrates a similar bracket stress level, despite incorporating ribs to increase structural reinforcement. Iteration D similarly indicates a comparable bracket stress value, although the brackets further include an increased landing area to improve engagement with the cabinet. These results indicate that, while structural shape and enhanced reinforcing features are incorporated into the plurality of brackets, the bracket stress values remain relatively consistent across these iterations. The performance suggests that each bracket configuration is capable of effectively absorbing a majority of transportation load transferred from the cabinet into the pallet through the plurality of brackets 200a-200d.

FIG. 5B illustrates a chart 500B showing cabinet stress for the multiple brackets design iterations. As depicted, Iteration A, representing a configuration without the plurality of brackets, exhibits the highest cabinet stress value, indicating that transportation loads are transferred directly into the cabinet structure. Iterations B, C, and D, utilizing the plurality of Z-shaped brackets positioned at the corners of the cabinet, demonstrate substantially reduced cabinet stress values. Iteration C shows the lowest cabinet stress, attributed to the inclusion of ribs that increase structural reinforcement, while Iteration D reflects improved load distribution facilitated by both ribs and an increased landing area. These results indicate that the plurality of brackets absorbs a majority of transportation load, thereby reducing stress imparted to the cabinet.

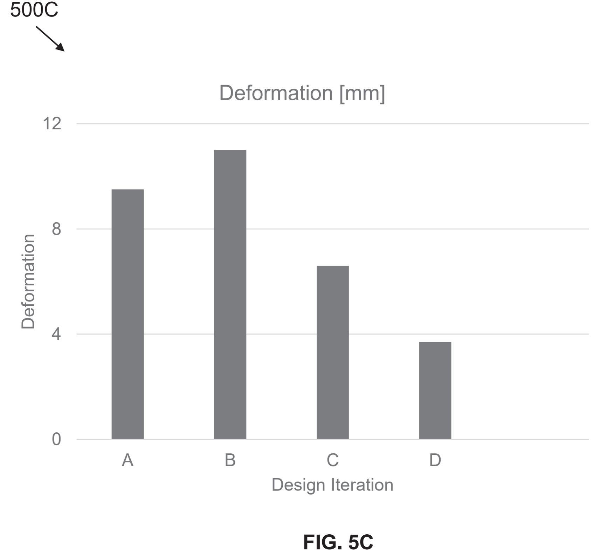

FIG. 5C illustrates a chart 500C showing cabinet deformation for the multiple brackets design iterations. As shown, Iteration A, corresponding to a configuration without the plurality of brackets 200a-200d, exhibits a high deformation value due to direct transmission of transportation loads into the cabinet structure. Iteration B demonstrates the highest deformation among the bracketed configurations, attributed to the use of Z-shaped brackets without additional reinforcement. Iteration C shows reduced deformation compared to Iteration B, due to the presence of ribs that increase structural stiffness. Iteration D exhibits the lowest deformation, reflecting improved engagement provided by both ribs and an increased landing area on each bracket. These results further demonstrate that the plurality of brackets reduces cabinet deformation by absorbing a majority of transportation load rather than allowing load forces to be transmitted directly into the cabinet 100.

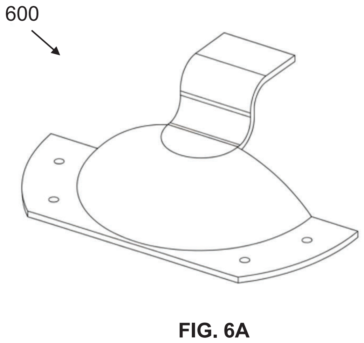

FIG. 6A illustrates a perspective view of a seismic bracket 600. The seismic bracket 600 may be an alternate design of the brackets 200. In this example, the seismic bracket 600 may be formed as a single sheet-metal component and may include a base portion configured to be fastened to a floor or ground using bolts, and an upper engagement portion shaped to support a cabinet through positive friction generated by a prestressing effect. Unlike brackets that mechanically fasten to the cabinet 100, the seismic bracket 600 may not be bolted to the cabinet 100, but instead engages the cabinet 100 along the upper curved flank to retain the cabinet 100, but instead engages the cabinet 100 along the upper curved flank to retain the cabinet 100 by interference and frictional contact under applied loads. The upper flank of the seismic brackets 600 may be shaped with an "S-shaped" configuration that provides controlled flexibility to accommodate lateral cabinet displacement during dynamic loading while minimizing stress transfer to the cabinet 100. A semi-spherical load-spreading region may also be provided to improve load distribution and enable the seismic bracket 600 to support seismic accelerations of up to approximately 3.2g horizontally and 1.5g vertically while maintaining cabinet restraint. To further enhance reliability under high loading, localized material near the bolt pattern is increased to resist tearing or yielding.

In an example, the seismic bracket 600 may not be limited to any particular shape, size, or geometric profile. Although certain examples described herein illustrate Z-shaped, S-shaped, or semi-spherical configurations, other bracket geometries may be employed to achieve suitable structural engagement with the cabinet 100 and load transfer to the ground or the pallet 102. For example, the seismic bracket 600a may include curved, planar, angled, segmented, or contoured surfaces, and may be elongated, compact, symmetric, or asymmetric in form. Further, the bracket footprint, thickness, and engagement surface area may be adjusted to accommodate different cabinet dimensions, cabinet weights, transportation conditions, or pallet configurations.

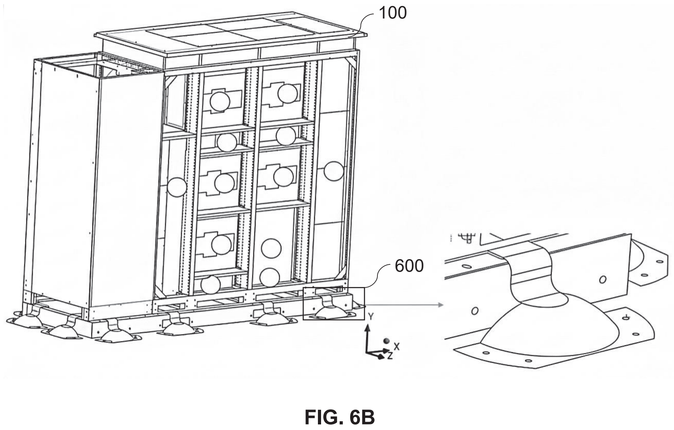

FIG. 6B illustrates a schematic diagram depicting the cabinet 100 resting directly on the ground using the seismic brackets 600. As shown, the seismic brackets 600 may be positioned beneath circumference of the cabinet 100, with each bracket 200a secured to the ground through underlying fasteners. Each seismic bracket 600 may include a base portion that may be bolted to the ground and an upper engagement portion configured to contact and support the cabinet 100 through a prestressed top flank. In this configuration, the cabinet 100 may not be mechanically fastened to the seismic brackets 600, instead, the cabinet 100 may be retained by positive friction and interference developed between the upper flank of each seismic bracket 600 and the cabinet surface.

The semi-spherical and S-shaped structural geometry of the seismic brackets 600 enables controlled cabinet movement during dynamic conditions, allowing the seismic brackets 600 to absorb seismic or transportation loads while limiting high-magnitude stress transfer into the cabinet structure. By coupling the cabinet 100 to the ground entirely through bracket-generated friction and structural engagement, the seismic brackets 600 avoids introducing holes, fasteners, or stress concentrations into the cabinet frame. This configuration simplifies installation and removal, preserves cabinet structural integrity, and reduces the need for complex seismic isolation equipment such as spring-based or electronically-assisted systems.

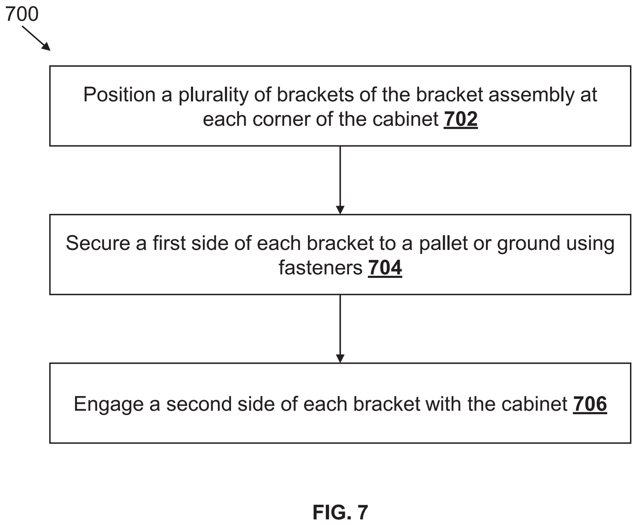

FIG. 7 illustrates a flowchart of a method 700 of securing a cabinet for seismic and transportation conditions using a bracket assembly.

At step 702, a plurality of brackets of the bracket assembly may be positioned at respective corner regions of the cabinet. Each bracket may be aligned such that a first side of the bracket is oriented toward a pallet toward ground and a second side is oriented toward the cabinet.

At step 704, the first side of each bracket may be secured to the pallet or the ground using fasteners. The fasteners may include screws, bolts, or other suitable mechanical fastening elements configured to rigidly couple the first side of each bracket to the pallet or to the ground. This fastening provides a stable attachment interface distributing loads into the pallet or the ground during transportation or seismic activity.

At step 706, the second side of each bracket may be engaged with the cabinet. In certain examples, engagement of the second side with the cabinet is achieved using a press-fit mechanism that applies a pre-stressing effect to hold the cabinet securely during transportation or seismic activity. The press-fit mechanism may create an interference fit between the bracket assembly and the cabinet, thereby ensuring that the cabinet remains securely in place throughout transport.

In some examples, the plurality of brackets is formed from a material selected from a group consisting of metal alloys, reinforced polymers, and composite materials. In additional examples, the plurality of brackets is Z-shaped and may include ribs for increased structural reinforcement and an increased landing area on the second side of each bracket to enhance engagement with the cabinet, thereby increasing load-bearing capacity of the bracket assembly during transportation or seismic activity. When implemented, the plurality of brackets absorbs a majority of transportation load, effectively isolating the cabinet from stresses that would otherwise result from direct attachment to the pallet or the ground.

Thus, the bracket assembly overcomes the limitations of conventional cabinet-to-pallet fastening arrangements by redirecting transportation loads away from the cabinet structure and into the pallet or the ground through a plurality of brackets. Unlike traditional methods that rely on direct fastening into the cabinet frame, thereby introducing stress concentrations, structural deformation, and potential damage, the bracket assembly employs a first side secured to the pallet and a second side that engages the cabinet, such as via press-fit or interference-fit contact. This configuration preserves cabinet structural integrity, reduces deformation and stress under transport conditions, and facilitates simplified installation and removal. In some examples, Z-shaped brackets having ribs and an increased landing area further enhance load-bearing capability and stability, providing a reusable, robust, and reliable transportation solution.

The methods, systems, devices, graphs, and/or tables discussed herein are examples. Various examples may omit, substitute, or add various procedures or components as appropriate. For instance, in alternative examples, the methods may be performed in an order different from that described, and/or various stages may be added, omitted, and/or combined. Also, features described with respect to certain examples may be combined in various other examples. Different aspects and elements of the examples may be combined in a similar manner. Also, technology evolves and, thus, many of the elements are examples and do not limit the scope of the disclosure or claims. Additionally, the techniques discussed herein may provide differing results with different types of context awareness classifiers.

Unless defined otherwise, all technical and scientific terms used herein have the same meaning as commonly or conventionally understood. As used herein, the articles "a" and "an" refer to one or to more than one (i.e., to at least one) of the grammatical object of the article. By way of example, "an element" means one element or more than one element. "About" and/or "approximately" as used herein when referring to a measurable value such as an amount, a temporal duration, and the like, encompasses variations of +20% or +10%, +5%, or +0.1% from the specified value, as such variations are appropriate to in the context of the systems, devices, circuits, methods, and other implementations described herein. "Substantially" as used herein when referring to a measurable value such as an amount, a temporal duration, a physical attribute (such as frequency), and the like, also encompasses variations of ±20% or ±10%, 15%, or ±0.1% from the specified value, as such variations are appropriate to in the context of the systems, devices, circuits, methods, and other implementations described herein.

As used herein, including in the claims, "and" as used in a list of items prefaced by "at least one of" or "one or more of" indicates that any combination of the listed items may be used. For example, a list of "at least one of A, B, and C" includes any of the combinations A or B or C or AB or AC or BC and/or ABC (i.e., A and B and C). Furthermore, to the extent more than one occurrence or use of the items A, B, or C is possible, multiple uses of A, B, and/or C may form part of the contemplated combinations. For example, a list of "at least one of A, B, and C" may also include AA, AAB, AAA, BB, etc.

Further example are set out in the clauses below:
1. A bracket assembly for securing a cabinet for seismic and transportation conditions, the bracket assembly comprising:
   a plurality of brackets configured to be positioned at each corner of the cabinet, wherein each bracket comprises:
   a first side configured to be securely fastened to a pallet or ground using fasteners; and
   a second side configured to engage the cabinet,
   wherein the plurality of brackets absorbs a majority of transportation load.
2. The bracket assembly of clause 1, wherein the second side engages the cabinet by a press-fit mechanism that applies a pre-stressing effect.
3. The bracket assembly of claim 2, wherein the press-fit mechanism creates an interference fit between the bracket assembly and the cabinet.
4. The bracket assembly of any one of clauses 1-3, wherein the plurality of brackets are formed from a material selected from a group consisting of metal alloys, reinforced polymers, and composite materials.
5. The bracket assembly of any one of clauses 1-3, wherein the plurality of brackets is z-shaped and further comprises ribs and an increased landing area on the second side of the bracket.
6. A method for securing a cabinet for seismic and transportation conditions using a bracket assembly, the method comprising:
   positioning a plurality of brackets of the bracket assembly at each corner of the cabinet;
   securing a first side of each bracket to a pallet or ground using fasteners; and
   engaging a second side of each bracket with the cabinet, wherein the plurality of brackets absorbs a majority of transportation load.
7. The method of clause 6, wherein the second side engages the cabinet by a press-fit mechanism.
8. The method of clause 7, wherein the press-fit mechanism creates an interference fit between the bracket assembly and the cabinet.
9. The method of any one of clauses 6-8, wherein the plurality of brackets are formed from a material selected from a group consisting of metal alloys, reinforced polymers, and composite materials.
10. The method of any one of clauses 6-9, wherein the plurality of brackets is z-shaped and further comprising ribs and an increased landing area on the second side of the bracket.

While illustrative and presently preferred examples of the disclosed systems, methods, and/or machine-readable media have been described in detail herein, it is to be understood that the inventive concepts may be otherwise variously embodied and employed, and that the appended claims are intended to be construed to include such variations, except as limited by the prior art. While the principles of the disclosure have been described above in connection with specific apparatuses and methods, it is to be clearly understood that this description is made only by way of example and not as limitation on the scope of the disclosure.

## Claims

1. A bracket assembly for securing a cabinet for seismic and transportation conditions, the bracket assembly comprising:
a plurality of brackets configured to be positioned at each corner of the cabinet, wherein each bracket comprises:
a first side configured to be securely fastened to a pallet or ground using fasteners; and
a second side configured to engage the cabinet,
wherein the plurality of brackets absorbs a majority of transportation load.

2. The bracket assembly of claim 1, wherein the second side engages the cabinet by a press-fit mechanism that applies a pre-stressing effect.

3. The bracket assembly of claim 2, wherein the press-fit mechanism creates an interference fit between the bracket assembly and the cabinet.

4. The bracket assembly of any one of the preceding claims, wherein the plurality of brackets are formed from a material selected from a group consisting of metal alloys, reinforced polymers, and composite materials.

5. The bracket assembly of any one of the preceding claims, wherein the plurality of brackets is z-shaped and further comprises ribs and an increased landing area on the second side of the bracket.

6. A method for securing a cabinet for seismic and transportation conditions using a bracket assembly, the method comprising:
positioning a plurality of brackets of the bracket assembly at each corner of the cabinet;
securing a first side of each bracket to a pallet or ground using fasteners; and
engaging a second side of each bracket with the cabinet, wherein the plurality of brackets absorbs a majority of transportation load.

7. The method of claim 6, wherein the second side engages the cabinet by a press-fit mechanism.

8. The method of claim 7, wherein the press-fit mechanism creates an interference fit between the bracket assembly and the cabinet.

9. The method of any one of claims 6-8, wherein the plurality of brackets are formed from a material selected from a group consisting of metal alloys, reinforced polymers, and composite materials.

10. The method of any one of claims 6-9, wherein the plurality of brackets is z-shaped and further comprising ribs and an increased landing area on the second side of the bracket.
